# EUROPEAN PATENT SPECIFICATION

(11) **EP 4 537 720 B1**
(45) Date of publication and mention of the grant of the patent: **13.05.2026**
(21) Application number: 24200730.0
(22) Date of filing: 17.09.2024
(51) Int. Cl.: A47J 36/16, A47J 36/32, G01K 1/14

(54) **A FOOD COOKING SYSTEM**
LEBENSMITTELKOCHSYSTEM
SYSTÈME DE CUISSON D'ALIMENTS

(30) Priority: 09.10.2023 FI 20236117
(43) Date of publication of application: 16.04.2025
(73) Proprietor: Metos Oy Ab, 04220 Kerava (FI)
(72) Inventor: Puupponen, Antti, 00510 Helsinki (FI)
(74) Representative: LEITZINGER OY

(56) References cited:
- EP-A1- 2 950 610
- CN-A- 110 960 086
- CN-A- 111 956 067
- CN-U- 218 330 325
- JP-U- S5 535 448
- US-A1- 2015 114 962
- US-A1- 2017 138 798
- ANONYMOUS: "Allpax SVU Sous Vide Garer in Schwarz, f�r Wasserb�der bis 20 l, gebogenes Design mit LED-Display, zum Vakuumgaren von Fleisch, Fisch & Gem�se, 1200 W", 18 July 2017 (2017-07-18), Amazon.de, pages 1 - 12, XP093243011, Retrieved from the Internet <URL:https://www.amazon.de/-/en/Allpax-Sous-Vide-Cooker-SVU/dp/B07427DTJY?th=1> [retrieved on 20250124]

## Description

### Field of the invention

The invention relates to cooking systems of food and equipment therefor. The cooking system may be in particular a sous vide -cooking system.

### Background of the invention

Cooking systems are known where food is cooked in hot water bath. In a cooking method known sous vide -cooking method, food is held submerged in hot water in a receptacle. The water temperature is lower than in conventional cooking in boiling water, typically between 50 and 90 Celsius degrees, and the cooking time is often, although not necessarily, longer than in conventional cooking. The cooking time can be, for example, hours or tens of hours, but in some cases also less than an hour. The receptacle is typically a kettle, for instance. For ensuring an optimal outcome in these systems, the cooking conditions typically need to be accurately adjusted during the long cooking process so as to maintain the water temperature within an optimal range. Particularly, water temperature should be controlled very accurately, such as to be within tolerance of 0,5 Celsius degrees from a target temperature.

In cooking systems, the conditions are prone to change during the relatively long period of cooking time. The changes involve heat loss but may also involve evaporation of water, whereby some water may need to be added to the system during the cooking.

The kettles of industrial and/or professional scale cooking systems are typically designed large. Thus, they also have large and heavy lids difficult to move and open. It may also be needed that the kettle is tiltable.

Such industrial and/or professional scale cooking systems are known, where temperature of the cooking system is measured by a sensor sensing the temperature of the kettle structure. Thus, the lid need not be opened for the sensing. This has provided relatively good results since the water and the kettle structure are in contact with each other. The water level on the other hand has been checked intermittently and additions made if needed. A drawback of this kind of system has been that it does not produce detection of prevailing temperature and water level inside the kettle very accurately and without delay. For example, when the heating system is active, temperature of the kettle structure can momentarily deviate from the temperature of the water and thereby inaccurately reflect the temperature of the water.

Also such systems have been contemplated, where a temperature sensor is submerged in the water, but there has been difficulties in providing a simple and robust solution producing consistently accurate results from inside the kettle interior where the food is also present and the water may need to be moved/stirred during the process for improving heat transfer and/or for facilitating even heat distribution.

Related prior art has been disclosed in documents US 20150114962A1, CN 218330325U and EP 2950610A1. These documents disclose sensing devices for cooking systems.

### Brief description of the invention

The object of the invention is to introduce an improved food cooking system.

An object is particularly to introduce a new solution by which one or more of the above-mentioned problems of prior art and/or drawbacks discussed or implied elsewhere in the description can be alleviated. An object is particularly to introduce a new sensing device solution by which the prevailing state of relevant cooking parameters can be sensed reliably and with a simple, robust and easy to use structure. An object is further to introduce a system where these objects are achievable and where the relevant cooking parameters can be reacted to in a timely and appropriate manner.

Embodiments are presented which enable one or more of: ensuring a lot of room inside the receptacle for receiving food to be cooked; unobstructed opening of a lid of the receptacle without disturbing sensing operations; firm, stable and predetermined positioning of the sensor(s) even in cases where water moves; simple, enduring and safe electrical connection to a control system; hygienic and easy to clean structures; solution that is simple and economic to manufacture; a compact structure consuming little space from other cooking functions; a high level of feed back -based automatization of relevant functions of a cooking system.

It is brought forward a new cooking system comprising a cooking receptacle such as a kettle; and a control and monitoring unit; and a sensing device for sensing conditions inside the cooking receptacle.

The sensing device comprises a metal tube comprising a first end portion, a second end portion and a hook portion connecting the first and second end portion, the hook portion having a downwards open concave shape, and the first and second end portions extend downwards from the hook portion; and one or more sensors mounted on the first end portion or an extension part fixed to it, in a position below the level of the hook portion; and an electrical wiring connected to said one or more sensors and extending from said one or more sensors inside the metal tube via the interior of the first end portion to the interior of the hook portion and therefrom to the interior of the second end portion; wherein the second end portion of the metal tube comprises an opening between the interior of the second end portion and the exterior of the metal tube in particular for facilitating connecting of the wiring to electrical means external to the metal tube.

The sensing device is mounted or at least mountable in a use position wherein it hangs vertically supported by the upper edge of the receptacle wall via the hook portion.

The one or more sensors comprise a temperature sensor for sensing temperature of water in which the first end portion is dipped, and the control and monitoring unit is configured to control based on sensor signals received from the temperature sensor a heating system of the receptacle such as in particular a heating device thereof.

The one or more sensors comprise at least one water level sensor for sensing level of water in which the first end portion is dipped, and the control and monitoring unit is configured to control based on sensor signals received from the water level sensor a water supply system of the receptacle, such as in particular a valve thereof.

With this kind of solution one or more of the above-mentioned objects can be facilitated.

The metal tube provides a protected route for the wiring. The shape of the tube is such that it facilitates firm mounting of the sensing device accurately, while the device is simple to manufacture, lightweighted, easy to handle and mount in a position where the one or more sensors are advantageously positioned. The device can be made compact, consuming only little space and requiring only very small route via which it can extend into a receptable.

Preferable further details of the cooking system and of the sensing device thereof are introduced in the following, which further details can be combined with the cooking system individually or in any combination.

In a preferred embodiment, the electrical wiring is suitable for transmitting sensor signals from the one or more sensors and/or for transmitting power to the one or more sensors. The electrical wiring preferably comprises at least one electrical conductor connected to each said sensor for transmitting sensor signals from the sensor. The electrical wiring preferably comprises at least one electrical conductor connected to each said sensor for transmitting power to the sensor.

In a preferred embodiment, the electrical wiring is connected to or connectable to an electrical means external to the metal tube via the opening.

In a preferred embodiment, the electrical means external to the metal tube is a cable for transmitting sensor signals from the one or more sensors and/or power to the electrical wiring. Preferably, the cable comprises one or more electrical conductors for transmitting sensor signals of the one or more sensors and/or power to the electrical wiring.

In a preferred embodiment, the cable is connected or connectable to a control and monitoring unit.

In a preferred embodiment, said opening of the second end portion is a downwards open end opening of the metal tube.

In a preferred embodiment, the first portion, the hook portion and the second portion are successive portions of a continuous one-piece metal tube. This structure provides a protected route for the wiring, and in particular so that the electrical wiring can extend inside a seamless tube (or one with minimized/small amount of seams) all the way from one end portion to the opposite end portion, from where it can connect to electrical means external to the metal tube through the opening of the second end portion at a level, which is below the level of the hook portion and below the edge of the kettle. The portions being successive portions of a continuous one-piece metal tube also facilitates that the solution is robust, hygienic, very simple to manufacture, easy to clean, enduring, very thin, well sealed and facilitates establishing a safe connection to a control.

In a preferred embodiment, the aforementioned opening between the interior of the second end portion and the exterior of the metal tube is below the level of the hook portion. The low positioned opening facilitates that the route to connect the wiring to electrical means (e.g. a cable) external to the metal tube is well protected relatively far and to a low position and beyond the immediate proximity of the upper edge of the receptacle wall. Low position of the opening also facilitates stability of the device in its use position. Any possible pull caused by the weight of the cable, for instance, does not tilt the device easily/much.

In a preferred embodiment, the aforementioned opening between the interior of the second end portion and the exterior of the metal tube is a downwards open end opening of the metal tube.

In a preferred embodiment, the cross sectional profile of the metal tube is corner free, the metal tube most preferably having a circular cross sectional profile. A corner free structure is simple, and easy to bend without braking. The interior of the tube portions are thus also space efficient, and they can be space efficiently made to receive sensor(s) and wiring components. A circular cross-sectional shape is particularly efficient since the end openings of the tube profile can be simply made to have threads for connection to an end sleeve.

In a preferred embodiment, the hook portion has been given its concave shape by bending a metal tube. Preferably, all the bends of the metal tube are around a horizontal axis.

In a preferred embodiment, the tube is two ended. Preferably, it has two end openings and, one being an opening between the interior of the first end portion and the exterior of the metal tube and the other being an opening between the interior of the second end portion and the exterior of the metal tube. The end openings and are in particular on opposite sides of the hook portion. Each said opening is particularly preferably a downwards open end opening of the metal tube. One or both of said end openings can be provided with a thread for engaging a sleeve inserted or to be inserted in the end opening.

In a preferred embodiment, each of said one or more sensors is mounted at least partially inside the interior of the first end portion or at least partially inside the interior of a tubular extension part fixed to the first end portion.

In a preferred embodiment, the first end portion has a downwards open end opening between the interior of the first end portion and the exterior of the metal tube.

In a preferred embodiment, the one or more sensors comprise a temperature sensor for sensing temperature of water in which the first end portion is dipped.

In a preferred embodiment, the one or more sensors comprise two of the water level sensors at different vertical levels, for sensing level of water in which the first end portion is dipped.

In a preferred embodiment, each said sensor is in flow connection, in particular via one or more water flow passages, with the exterior of the sensing device, the water being arranged to flow into direct contact with the sensor when the end portion is dipped into water such that the level thereof is at or above the level of the sensor.

In a preferred embodiment, the first end portion and the second end portion extend downwards from the hook portion apart from each other, the sensing device being able to receive a wall of the receptacle between them and to be placed to hang supported by the upper edge of the wall via the hook portion.

In a preferred embodiment, the sensing device comprises a horizontal support and positioning member, preferably fixed to the first end portion, protruding from the first end portion towards the side on which the second end portion extends.

In a preferred embodiment, the first end portion, the hook portion, the second end portion and preferably also the horizontal support and positioning member extend along the same plane.

In a preferred embodiment, in said use position, a horizontal support and positioning member horizontal support and positioning member of the device leans against an inner face of a wall of the receptacle positioned it such that there is a gap between the first end portion and the inner face of a wall of the receptacle.

In a preferred embodiment, the sensing device is mounted or at least mountable to hang vertically supported by the upper edge of the receptacle wall via the hook portion.

In a preferred embodiment, the hook portion, in particular of the sensing device when mounted, extends over an upper edge of a receptacle wall resting against it.

In a preferred embodiment, the first end portion, in particular of the sensing device when mounted, extends downwards from the hook portion into interior of the receptacle.

In a preferred embodiment, the sensing device when mounted has the wall of the receptacle between the first and second portion.

In a preferred embodiment, the sensing device comprises a horizontal support and positioning member protruding from the first end portion towards the side on which the second end portion extends. When the sensing device is mounted, the member leans against an inner face of a wall of the receptacle, in particular the sensing device being supported in horizontal direction by said inner face of wall and positioned in horizontal direction relative to the wall such that there is a gap between the first end portion and the inner face of a wall of the receptacle.

In a preferred embodiment, the cooking system comprises a heating system and/or a water supply means.

In a preferred embodiment, the cooking system comprises a control and monitoring unit to which the sensing device is connected.

In a preferred embodiment, the cooking system comprises control and control and monitoring unit configured to control, based on sensor signals received from the one or more sensors, a heating system of the receptacle such as a kettle such as in particular a heating device thereof and/or a water supply system for supplying water into the receptacle, such as in particular a valve thereof.

In a preferred embodiment, the water supply system comprises a water pipe flow of which is controllable by a valve and having an water outlet via which water can be outlet to flow in the receptacle.

In a preferred embodiment, the control and monitoring unit comprises a computer and/or one or more processors.

In a preferred embodiment, the cooking system comprises a lid for the receptacle, which is movable between open and closed position, and comprises a recess at its edge through which recess the sensing device extends or can extend into the receptacle, when the lid is in closed position.

In a preferred embodiment, the cooking system comprises a rotatable circulator for circulating water inside the receptacle, the circulator preferably comprising a body and blades connected to the body, and a rotating means, such as an electric motor for rotating the circulator.

In a preferred embodiment, the receptacle is a kettle.

In a preferred embodiment, the cooking system is a sous vide -cooking system.

In a preferred embodiment, the wall of the receptacle has a shell containing or at least suitable for receiving heating fluid, preferably water or other liquid, and the heating system is arranged to heat the heating fluid. The heating system preferably comprises a heating device, which is preferably inside the shell.

### Brief description of the drawings

In the following, the present invention will be described in more detail by way of example and with reference to the attached drawings, in which
Figure 1 illustrates a schematic side view of a sensing device according to an embodiment in a use position.
Figure 2 illustrates a front view of the sensing device of Figure 1.
Figure 3 illustrates cross-section B-B of Figure 1.
Figure 4 illustrates a schematic side view of a cross section of a cooking system according to an embodiment comprising a sensing device of Figure 1.
Figure 5 illustrates a schematic top view of the cooking system of Figure 4.
Figure 6 illustrates preferred details of connections between components of the a sensing device of Figure 1 and the cooking system of Figure 4.

### Detailed description

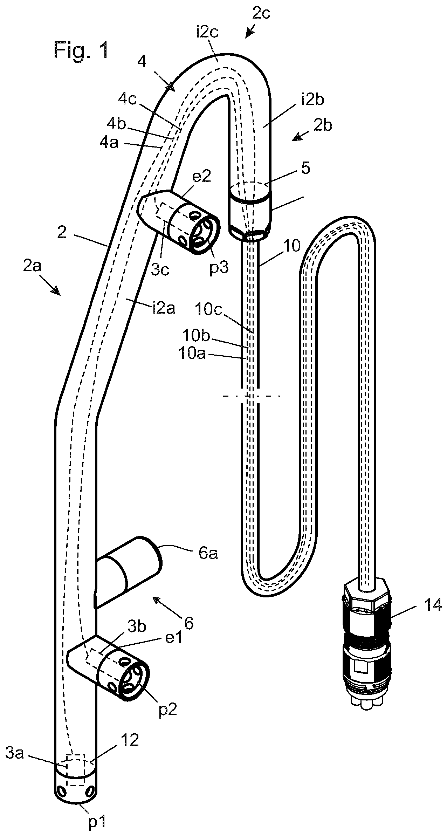

Figure 1 illustrates a sensing device 1 according to an embodiment in its use position. The sensing device 1 is suitable for sensing conditions inside a receptacle, such as a kettle, wherein the receptacle contains water, such as in particular water the temperature of which is between 50 and 90 Celsius degrees.

The sensing device 1 comprises a metal tube 2 comprising a first end portion 2a, a second end portion 2b and a hook portion 2c connecting the first and second end portion 2a,2b. The hook portion 2c has a downwards open concave shape, and the first and second end portions 2a,2b extend downwards from the hook portion 2c.

The sensing device 1 further comprises one or more sensors 3a,3b,3c mounted on it in a position below the level of the hook portion 2c. In the preferred embodiment illustrated, the sensing device 1 comprise a sensor 3a mounted on the first end portion 2a and sensors 3 and 3b, each mounted on an extension part e1,e2 fixed to the first end portion 2a.

The sensing device 1 further comprises an electrical wiring 4 connected to said one or more sensors 3a,3b,3c and extending from said sensors 3a,3b,3c inside the metal tube 2 via the interior i2a of the first end portion 2a to the interior i2c of the hook portion 2c and therefrom to the interior i2b of the second end portion 2b. The metal tube 2 provides a protected route for the wiring, protecting it e.g. from damages, wear, external abuse, pull, wear, water flow or tampering. It also facilitates that the device an easy to clean structure. The shape is such that it is very simple to manufacture, lightweighted, easy to handle and place in use position. It is also very compact, consuming only little space and requiring only very small route via which it can extend into the receptacle 7.

The electrical wiring 4 is suitable for transmitting sensor signals from the one or more sensors 3a,3b,3c and/or for transmitting power [electricity] to the one or more sensors 3a,3b,3c.

The second end portion 2b of the metal tube comprises an opening 5 between the interior i2b of the second end portion 2b and the exterior of the metal tube 2 in particular for facilitating connecting of the wiring 4 to electrical means 10 external to the metal tube 2. In the preferred embodiment, said opening 5 is a downwards open end opening of the metal tube 2. Thus, a connection can be established between the wiring 4 and components 10,110 outside the tube. A sleeve s has been inserted in said end opening 5 by screwing. The end opening 5 is provided with an internal thread for engaging the sleeve s connected or to be inserted in the end opening.

The electrical wiring 4 comprises at least one electrical conductor 4a,4b,4c connected to each said sensor 3a,3b,3c for transmitting sensor signals from the sensor 3a,3b,3c. In addition, the electrical wiring 4 comprises at least one electrical conductor connected to each said sensor 3a,3b,3c for transmitting power to the sensor 3a,3b,3c.

The electrical wiring 4 is connected to an electrical means 10 external to the metal tube 2 via the opening 5. In the preferred embodiment, the electrical means 10 external to the metal tube 2 is a cable 10 for transmitting sensor signals from the one or more sensors 3a,3b,3c and/or power to the electrical wiring 4. A cable provides a reliable means for transmitting signals, as well as electric power to the sensing device 1. The cable 10 is however not necessary, because the sensor signal transmitting means could alternatively be a wireless signal transmitter provided with a battery, for example. In the preferred embodiment, the cable 10 is connected or connectable to a control and monitoring unit 110. For facilitating this, the cable 10 comprises a connector 14 at its end, such as a plug.

The opening 5 being a downwards open end-opening of the tube 2 provides that the structure of the device 1 left outside the kettle 7 does not consume much space and can extend along the kettle flank vertically facilitating its stability. The cable 10 can also thus settle close to the kettle wall 7a and any possible pull caused by the weight of the cable 10 does not tilt the device 1 much.

The opening 5 is below the level of the hook portion 2c. The low position thereof facilitates that the route to connect the wiring 4 to electrical means (e.g. a cable 10) external to the metal tube 2 is well protected relatively far, to a low position and beyond the immediate proximity of the upper edge of the kettle wall 7a, where parts are more vulnerable to wear, collisions with a lid or other objects, or water exposure.

The first end portion 2a and the second end portion 2b extend downwards from the hook portion 2c apart from each other, the sensing device 1 being able to receive a wall 7a of the receptacle 7 between them and to be placed to hang supported by the upper edge 7b of the wall 7a via the hook portion 2c.

The sensing device 1 is thus mountable in a use position wherein it hangs vertically supported by an upper edge 7b of a receptacle wall 7a via the hook portion 2c, in particular such that the first end portion 2a extends downwards from the hook portion 2c into interior of the receptacle 7.

In the preferred embodiment, the one or more sensors 3a,3b,3c comprise a temperature sensor 3a, in particular for sensing temperature of water in which the first end portion 2a is dipped. Thus, the sensing device 1 can provide temperature information. The one or more sensors 3a,3b,3c moreover comprise at least one water level sensor 3b,3c, in this case particularly two of them at different vertical levels, for sensing level of water in which the first end portion 2a is dipped.

Each said sensor 3a,3b,3c is in flow connection, in particular via one or more water flow passages p1,p2,p3, with the exterior of the sensing device 1, the water being arranged to flow into direct contact with the sensor 3a,3b,3c when the end portion is dipped into water such that the level thereof is at or above the level of the sensor 3a,3b,3c. Thus, each said sensor can be brought to sense directly temperature and/or presence of water at the level thereof.

The sensing device 1 comprises a horizontal support and positioning member 6 fixed to the first end portion 2a and protruding from the first end portion 2a towards the side on which the second end portion 2a extends. This member 6 is able to keep distance between the first end portion 2a and the wall 7a. In said use position, the member 6 leans against an inner face of a wall 7a of the receptacle 7, in particular the sensing device 1 being supported in horizontal direction by said inner face of wall 7a and positioned in horizontal direction relative to the wall 7a such that there is a gap g between the first end portion 2a and the inner face of a wall 7a of the receptacle 7. The gap g facilitates that the position of the sensors 3a,3,3c can be determined accurately, and at least ensured that the tube 2 does not extend too close the wall 7a, in particular such that the sensors 3a,3b,3c are very close to the wall 7a or even in contact with it. This is most relevant for the temperature sensor 3a, because in immediate proximity of the wall 7a the temperatures often reflect poorly the overall temperature of the water, which is due to heat transfer between the wall 7a and the water. The member 6 is preferably more than 1 cm long, preferably more than 2 cm long. It is preferably oriented to protrude the first end portion 2a horizontally or at an angle less than 45 deg from horizontal. The member 6 has preferably at its end a contact surface for contacting the wall 7a of the receptacle 7. The contact surface is preferably of material having higher coefficient of friction that the tube 2. Friction facilitates that the device 1 is not very easily moved by water flow, which occurs if/when the water is stirred, e.g. by a circulator. Most preferably the contact surface is of material comprising polymer, whereby its friction properties are simply selectable and generally higher than of metal. The material is or comprises preferably one of the following: rubber, silicon, polyurethane, elastomer.

In the preferred embodiment, the compactness and simplicity of the device 1 has been facilitated such that the hook portion 2c, the second end portion 2b, as well as the horizontal support and positioning member 6, extend along the same plane.

In the preferred embodiment, each of said one or more sensors 3a,3b,3c is mounted at least partially inside the interior i2a of the first end portion 2a or at least partially inside the interior of a tubular extension part e1,e2 fixed to the first end portion 2a. The interior i2a of the first end portion 2a, and correspondingly the interior of a tubular extension part e1,e2, provides a protected nest for the sensors 3a,3b,3c reducing damages or wear, which might be caused in use due to bumping of the device against other components, e.g. during handling or during cooking. Bumping of the device might be caused for example by user dropping the device or by water circulation in the kettle 7.

The tube 2 is two ended. It has two end openings 5 and 12, one being an opening 12 between the interior i2a of the first end portion 2a and the exterior of the metal tube 2 and the other being an opening 5 between the interior i2b of the second end portion 2b and the exterior of the metal tube 2. The end openings 5 and 12 are on opposite sides of the hook portion 2c. One 5 serves for establishing a connection between the wiring 4 and components 10,110 outside the tube 2, and the other 12 serves for establishing a flow connection between sensor 3a and water in which the first end portion 2a is dipped. In the preferred embodiment, each said opening 5,12 is more specifically a downwards open end opening of the metal tube 2.

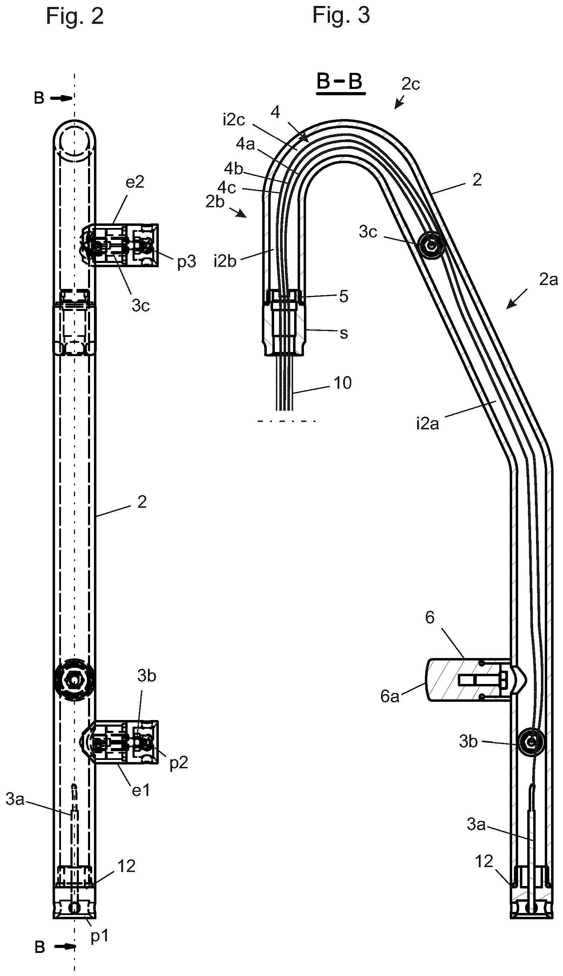

The first portion 2a, the hook portion 2c and the second portion 2b are successive portions of a continuous one-piece metal tube. This makes its manufacturing very simple, and produces a simple structure well suitable for the purpose, with regard to compactness, space consumption endurance and stability in its use position. These advantages are further facilitated by that the cross sectional profile of the metal tube 2 is corner free, most preferably circular as in the present case [see Figure 2]. Said advantages are also further facilitated by that in the present case all the bends of the metal tube 2 are around a horizontal axis.

For facilitating manufacturing, as well as simplicity of structure, the hook portion 2c has been given its concave shape by bending a metal tube, the cross-sectional profile of which metal tube is corner free, and most preferably cross sectional profile is circular, or alternatively elliptical.

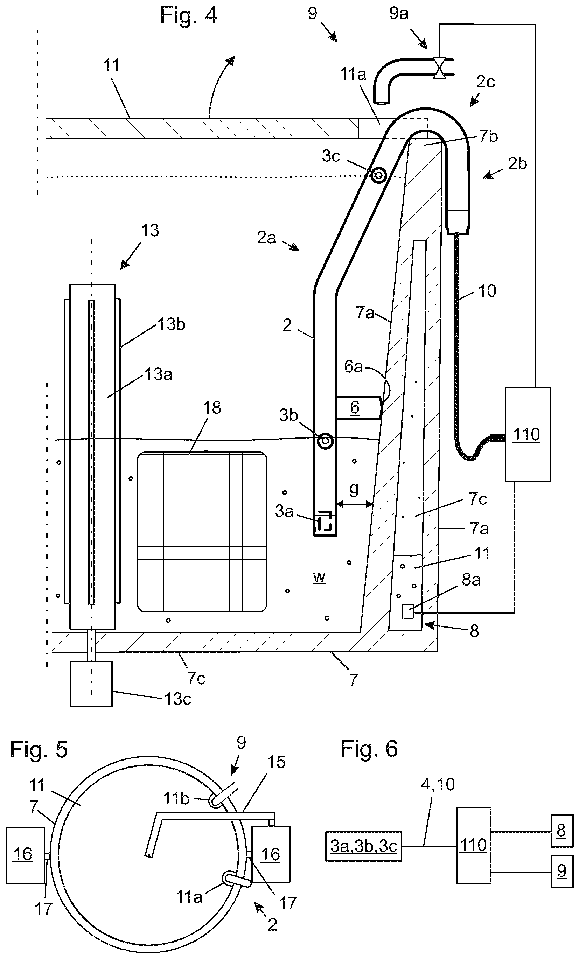

Figure 4 illustrates a cooking system 100 according to an embodiment. The cooking system 100 comprises a receptacle 7, in particular a kettle, and a sensing device 1 as described referring to Figures 1-3. Figure 4 illustrates the sensing device 1 in use position.

The sensing device 1 is mounted to hang vertically supported by the upper edge 7b of the receptacle wall 7a via the hook portion 2c of the sensing device 1. The hook portion 2c extends over an upper edge 7b of a receptacle wall 7b resting against it. The sensing device 1 has the wall 7a of the receptacle 7 between the first and the second portion 1a,1b of the metal tube 2. The interior of the receptacle contains water w. The first end portion 2a of the sensing device 1 extends downwards from the hook portion 2c into interior of the receptacle 7, in particular such that the first end portion 2a is dipped in the water w. One or more of the sensors 3a,3b,3c are at or below water level [meaning here the upper surface level]. In Figure 4, the temperature sensor 3a is below the water level and one of the water level sensors 3b,3c is at the water level. The temperature sensor 3a can thus sense temperature of the water w. The system 100, in particular a control and monitoring unit 110 thereof, can be configured to determine whether the temperature fulfils one or more predetermined criteria, e.g. including preferably whether the temperature is within a predetermined range, and if the one or more predetermined criteria are not met, reacting to this occurrence, e.g. by controlling a heating system 8. The sensor 3b can sense if water level falls below it. The system 100, in particular a control and monitoring unit 110 thereof, can be configured react to this occurrence, e.g. by controlling a water supply means 9. The sensor 3b can be used to monitor falling of water level below a first level and the other water level sensor 3c to monitor falling of water level below a second level. Thus, the system can have two different modes having two different filling levels to be monitored. In the illustrated situation, the water level sensed by the second sensor 3c need not be monitored, and it can be out of use.

The cooking system 100 comprises a control and monitoring unit 110 to which the sensing device 1 is connected, in particular with the electrical means 10 external to the metal tube 2.

The horizontal support and positioning member 6 of the sensing device 1 leans against an inner face of a wall 7a of the receptacle 7, in particular the sensing device 1 being supported in horizontal direction by said inner face of wall 7a and positioned in horizontal direction relative to the wall 7a such that there is a gap g between the first end portion 2a and the inner face of a wall 7a of the receptacle 7. This is advantageous because the device 1, as well as its sensors, is accurately positioned close to wall 7a but not too close to it. This leaves much room inside the receptacle for receiving food to be cooked. The member 6 has at its [free] end a contact surface 6a contacting the wall 7a of the receptacle 7. As described earlier, the contact surface is preferably of material having higher coefficient of friction than the tube 2.

In the preferred embodiment, the cooking system 100 comprises a heating system 8 and a water supply means 9, as illustrated in Figure 4. The cooking system 100 is more specifically such that it comprises a control and monitoring unit 110 configured to control, based on sensor signals received from the one or more sensors 3a,3b,3c, a heating system 8 of the receptacle such as a kettle such as in particular a heating device 8a thereof and/or a water supply system 9 for supplying water into the receptacle 7, such as in particular a valve 9a thereof. The one or more sensors 3a,3b,3c comprise a temperature sensor 3a for sensing temperature of water w in which the first end portion 2a is dipped, and the control and monitoring unit 110 is configured to control based on sensor signals received from the temperature sensor 3a a heating system 8 of the receptacle 7 such as in particular a heating device 8a thereof. The one or more sensors 3a,3b,3c comprise at least one water level sensor 3b for sensing level of water in which the first end portion 2a is dipped, and the control and monitoring unit 110 is configured to control based on sensor signals received from the water level sensor 3b a water supply system 9 of the receptacle 7, such as in particular a valve 9a thereof. In the preferred embodiment, the water supply system 9 comprises a water pipe 9b flow of which is controllable by a valve 9a and having a water outlet via which water can be outlet to flow in the receptacle 7.

The control and monitoring unit 110 is advantageous, because it can provide a centralized means providing high level of feed back -based automatization of functions of the system 100. The control and monitoring unit 110 can be such that it comprises a computer and/or one or more processors.

In the preferred embodiment, the cooking system 100 comprises a lid 11 for the receptacle 7, which is movable, in particular by tilting, between open and closed position, and comprises a recess 11a at its edge through which recess 11a the sensing device 1 extends or can extend into the receptacle 7, when the lid is in closed position. This is advantageous, because the lid 11 need not be opened for the sensing. On the other hand, the recess being a the edge of the lid, provides that the lid 11 can be opened even though the device 1 is left in its use position. The described structure of the device 1 is advantageous in this context, because the device 1 is compact and does not require the recess 11a to be large, nor does the device 1 to be supported by the lid 11.

The system 100 also preferably includes a basket 18 for receiving food to be cooked. The basket is preferably a grid basket comprising grid walls and bottom.

As illustrated in Figure 5 the lid 11 is preferably mounted tiltably via a support arm 15 pivotally mounted on a frame 16 of the cooking system 100. The frame 13 is preferably supported on a floor or other mounting base. The receptacle 2 can be tiltably mounted on the frame 16 via one or more joints 17. Thus, it can be easily emptied or maintained, for example, even when it is of industrial scale, and thereby heavy and large.

In the preferred embodiment, the cooking system 100 comprises a rotatable circulator 13 for circulating water inside the receptacle 7, the circulator 13 preferably comprising a body 13a and blades 13b connected to the body 13a, and a rotating means, such as an electric motor 13c for rotating the circulator 13. In context of this kind of system 100, the described structure of the device 1 is advantageous because the device 1 is accurately positioned close to wall 7a but not too close to it. The device is also maintained in its position also in case of water movement. The circulator 13 is however not necessary, because the system 100 is usable also without circulation.

In the preferred embodiment, the receptacle 7 is a kettle. The kettle is preferably a metal kettle, such as made of steel, most preferably. The receptacle 7 comprises a wall 7a surrounding an interior and a bottom. The receptacle 7 has an open top, coverable by a lid 11.

Figure 4 illustrates particularly a cooking system 100, which is a sous vide - cooking system. Figure 4 illustrates also preferred details of the heating system 8 of the receptacle 7. The heating system could alternatively be different, but this kind of system is advantageous for a sous vide -system, because it can transfer heat evenly to water w, and simply implemented when the target temperature is below water boiling temperature 100 Celsius degrees.

In the illustrated case, the wall 7a of the receptacle 7 has a shell 7c containing or at least suitable for receiving heating fluid 11, preferably water or other liquid, and the heating system 8 is arranged to heat the heating fluid 11. The heating system 8 comprises a heating device 8a, which is preferably inside the shell 7c.

In Figure 1, the cable 10 has been drawn to comprise conductors 10a-10c which are in connection with conductors 4a-4c of the wiring 4. Generally, in the Figures the conductors 4a-4c have been illustrated by one line drawn to leave each sensor 3a-3c, for clarity [same applies to conductors 10a-10c]. However, each said line can represent a pair of parallel electrical conductors, such as a first conductor for transmitting sensor signals from a sensor 3a,3b,3c and a second conductor for transmitting power [electricity] to the sensor 3a,3b,3c in question. The transmission of signals and/or power could however be arranged in numerous alternative ways, as it is known in the field of electronics. For example, it is not necessary that each sensor 3a,3b,3c is wired by its own individual conductors throughout the tube length / cable 10 length. For example, it is possible to provide transmission of signals and/or power of more than one of the sensors via the same conductor.

Generally, said connecting the electrical wiring 4 to an electrical means 10 external to the metal tube 2 via the opening 5 can be implemented by arranging electrical conductors of the wiring 4 to extend via the opening 5 out from the metal tube to be connected to the electrical means 10, or alternatively in some other way, such as arranging a connector component e.g. screw terminal block or equivalent inside the interior i2b of the second end portion 2b, to which connector component conductors of the wiring 4 and conductors of the electrical means 10 can be connected. The conductors of the wiring 4 and the conductors of the electrical means 10 can be successive parts of continuous conductors.

Generally, in the above, when referring to directions, such as upwards, downwards and below, for instance, the sensing device 1 has been regarded to be in a use position, i.e. in a position in which it is intended to be mounted when used.

Generally, the metal tube 2 is preferably a steel tube, the steel preferably being stainless steel.

Generally, as mentioned, the first portion 2a, the hook portion 2c and the second portion 2b are preferably successive portions of a continuous one-piece metal tube 2. Although the continuous one-piece structure is advantageous as it provides a protected route, excellent hygiene and minimal amount of seams, for instance, this structure is not necessary. Namely, as an alternative to this, the metal tube 2 may be formed of plurality, such as of two or three, successive metal tube sections connected coaxially to each other. Then, these metal tube sections are preferably connected by threaded engagement to form the metal tube 2. Then, for facilitating said threaded engagement, preferably at least the opposing ends of the tube sections connected/to be connected to each other are preferably circular in cross section, one of the opposing ends being provided with an internal thread and the other with an external thread. A sealant or a seal member is preferably provided in the connection area of the opposing ends.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A cooking system (100) comprising
a cooking receptacle (7), such as a kettle; and
a control and monitoring unit (110); and
a sensing device (1) for sensing conditions inside the cooking receptacle (7);
wherein the sensing device (1) comprises
a metal tube (2) comprising a first end portion (2a), a second end portion (2b) and a hook portion (2c) connecting the first and second end portion (2a,2b), the hook portion (2c) having a downwards open concave shape, and the first and second end portions (2a,2b) extend downwards from the hook portion (2c); and
one or more sensors (3a,3b,3c) mounted on the first end portion (2a) or an extension part (e1,e2) fixed to it, in a position below the level of the hook portion (2c); and
an electrical wiring (4) connected to said one or more sensors (3a,3b,3c) and extending from said one or more sensors (3a,3b,3c) inside the metal tube (2) via the interior (i2a) of the first end portion (2a) to the interior (i2c) of the hook portion (2c) and therefrom to the interior (i2b) of the second end portion (2b);
wherein the second end portion (2b) of the metal tube comprises an opening (5) between the interior (i2b) of the second end portion (2b) and the exterior of the metal tube (2) in particular for facilitating connecting of the electrical wiring (4) to electrical means (10) external to the metal tube (2); and
wherein the sensing device (1) is mounted or at least mountable in a use position wherein it hangs vertically supported by the upper edge (7b) of the receptacle wall (7a) via the hook portion (2c); and
wherein the one or more sensors (3a,3b,3c) comprise
a temperature sensor (3a) for sensing temperature of water (w) in which the first end portion (2a) is dipped, and the control and monitoring unit (110) is configured to control based on sensor signals received from the temperature sensor (3a) a heating system (8) of the cooking receptacle (7) such as in particular a heating device (8a) thereof; and
at least one water level sensor (3b) for sensing level of water (w) in which the first end portion (2a) is dipped, and the control and monitoring unit (110) is configured to control based on sensor signals received from the water level sensor (3b) a water supply system (9) of the cooking receptacle (7), such as in particular a valve (9a) thereof.

2. A cooking system (100) according to claim 1, wherein
the first end portion (2a), in particular of the sensing device (1) mounted as defined, extends downwards from the hook portion (2c) into interior of the cooking receptacle (7).

3. A cooking system (100) according to any of the preceding claims, wherein the sensing device (1) comprises a horizontal support and positioning member (6) protruding from the first end portion (2a) towards the side on which the second end portion (2a) extends, and the member (6) leans against an inner face of a wall (7a) of the cooking receptacle (7), in particular the sensing device (1) being supported in horizontal direction by said inner face of wall (7a) and positioned in horizontal direction relative to the wall (7a) such that there is a gap (g) between the first end portion (2a) and the inner face of a wall (7a) of the cooking receptacle (7).

4. A cooking system (100) according to any of the preceding claims, wherein the cooking system (100) comprises a lid (11) for the cooking receptacle (7), which is movable between open and closed position, and comprises a recess (11a) at its edge through which recess (11a) the sensing device (1) extends or can extend into the cooking receptacle (7), when the lid (11) is in closed position.

5. A cooking system (100) according to claim 4, wherein the lid (11) is mounted tiltably via a support arm (15) pivotally mounted on a frame (16) of the cooking system (100).

6. A cooking system (100) according to any of the preceding claims, wherein the electrical wiring (4) is suitable for transmitting sensor signals from the one or more sensors (3a,3b,3c) and/or for transmitting power to the one or more sensors (3a,3b,3c).

7. A cooking system (100) according to any of the preceding claims, wherein the electrical wiring (4) is connected to or connectable to an electrical means (10) external to the metal tube (2) via the opening (5), wherein the electrical means (10) external to the metal tube (2) is preferably a cable (10) for transmitting sensor signals from the one or more sensors (3a,3b,3c) and/or power to the electrical wiring (4).

8. A cooking system (100) according to any of the preceding claims, wherein the first portion (2a), the hook portion (2c) and the second portion (2b) are successive portions of a continuous one-piece metal tube (2).

9. A cooking system (100) according to any of the preceding claims, wherein sensing device (1) is further such that
- the aforementioned opening (5) between the interior (i2b) of the second end portion (2b) and the exterior of the metal tube (2) is below the level of the hook portion (2c); and/or
- the aforementioned opening (5) between the interior (i2b) of the second end portion (2b) and the exterior of the metal tube (2) is a downwards open end opening of the metal tube (2); and/or
- the cross sectional profile of the metal tube (2) is corner free; and/or
- the metal tube (2) has a circular cross sectional profile; and/or
- the tube (2) is two ended, having two end openings (5 and 12), one (12) being an opening between the interior (i2a) of the first end portion (2a) and the exterior of the metal tube (2) and the other (5) being an opening between the interior (i2b) of the second end portion (2b) and the exterior of the metal tube (2).

10. A cooking system (100) according to any of the preceding claims, wherein each of said one or more sensors (3a,3b,3c) is mounted at least partially inside the interior (i2a) of the first end portion (2a) or at least partially inside the interior of a tubular extension part (e1,e2) fixed to the first end portion (2a).

11. A cooking system (100) according to any of the preceding claims, wherein the one or more sensors (3a,3b,3c) comprise two of the water level sensors (3b,3c) at different vertical levels.

12. A cooking system (100) according to any of the preceding claims, wherein each said sensor (3a,3b,3c) is in flow connection, in particular via one or more water flow passages (p1,p2,p3), with the exterior of the sensing device (1), the water being arranged to flow into direct contact with the sensor (3a,3b,3c) when the end portion is dipped into water such that the level thereof is at or above the level of the sensor (3a,3b,3c).

13. A cooking system (100) according to any of the preceding claims, wherein the sensing device (1) comprises a horizontal support and positioning member (6) protruding from the first end portion (2a) towards the side on which the second end portion (2b) extends.

14. A cooking system (100) according to any of the preceding claims, wherein the water supply system (9) comprises a water pipe (9b) flow of which is controllable by a valve (9a) and having an water outlet via which water can be outlet to flow in the cooking receptacle (7).

## Patentansprüche

1. Kochsystem (100), umfassend
einen Kochbehälter (7), wie etwa einen Kessel; und eine Steuer- und Überwachungseinheit (110); und
eine Erfassungsvorrichtung (1) zum Erfassen von Bedingungen im Inneren des Kochbehälters (7);
wobei die eine Erfassungsvorrichtung (1) umfasst:
ein Metallrohr (2), das einen ersten Endabschnitt (2a), einen zweiten Endabschnitt (2b) und einen Hakenabschnitt (2c) umfasst, der den ersten und den zweiten Endabschnitt (2a, 2b) verbindet, wobei der Hakenabschnitt (2c) eine nach unten offene, konkave Form aufweist und sich der erste und der zweite Endabschnitt (2a, 2b) von dem Hakenabschnitt (2c) nach unten erstrecken; und
einen oder mehrere Sensoren (3a, 3b, 3c), die auf dem ersten Endabschnitt (2a) oder einem daran befestigten Verlängerungsteil (e1, e2) in einer Position unterhalb der Höhe des Hakenabschnitts (2c) montiert sind; und
eine elektrische Verkabelung (4), die mit dem einen oder den mehreren Sensoren (3a, 3b, 3c) verbunden ist und sich von dem einen oder den mehreren Sensoren (3a, 3b, 3c) im Inneren des Metallrohrs (2) über das Innere (i2a) des ersten Endabschnitts (2a) zu dem Inneren (i2c) des Hakenabschnitts (2c) und von dort zu dem Inneren (i2b) des zweiten Endabschnitts (2b) erstreckt;
wobei der zweite Endabschnitt (2b) des Metallrohrs eine Öffnung (5) zwischen dem Inneren (i2b) des zweiten Endabschnitts (2b) und dem Äußeren des Metallrohrs (2) umfasst, insbesondere um ein Verbinden der elektrischen Verkabelung (4) mit elektrischen Mitteln (10) außerhalb des Metallrohrs (2) zu ermöglichen; und
wobei die Erfassungsvorrichtung (1) in einer Gebrauchsposition montiert ist oder zumindest montierbar ist, in der sie vertikal hängt, über den Hakenabschnitt (2c) durch den oberen Rand (7b) der Behälterwand (7a) getragen; und
wobei der eine oder die mehreren Sensoren (3a, 3b, 3c) umfassen:
einen Temperatursensor (3a) zum Erfassen einer Temperatur von Wasser (w), in das der erste Endabschnitt (2a) eingetaucht ist, und wobei die Steuer- und Überwachungseinheit (110) dazu ausgelegt ist, basierend auf Sensorsignalen, die von dem Temperatursensor (3a) empfangen werden, ein Heizsystem (8) des Kochbehälters (7), wie insbesondere eine Heizvorrichtung (8a) davon, zu steuern; und
mindestens einen Wasserfüllstandssensor (3b) zum Erfassen eines Füllstands von Wasser (w), in das der erste Endabschnitt (2a) eingetaucht ist, und wobei die Steuer- und Überwachungseinheit (110) dazu ausgelegt ist, basierend auf Sensorsignalen, die von dem Wasserfüllstandssensor (3b) empfangen werden, ein Wasserversorgungssystem (9) des Kochbehälters (7), wie insbesondere ein Ventil (9a) davon, zu steuern.

2. Kochsystem (100) nach Anspruch 1, wobei
sich der erste Endabschnitt (2a), insbesondere der wie definiert montierten Erfassungsvorrichtung (1), von dem Hakenabschnitt (2c) nach unten in ein Inneres des Kochbehälters (7) erstreckt.

3. Kochsystem (100) nach einem der vorhergehenden Ansprüche, wobei die Erfassungsvorrichtung (1) ein horizontales Trag- und Positionierungselement (6) umfasst, das von dem ersten Endabschnitt (2a) in Richtung der Seite, auf der sich der zweite Endabschnitt (2a) erstreckt, vorsteht, und das Element (6) an eine Innenfläche einer Wand (7a) des Kochbehälters (7) gelehnt ist, wobei die Erfassungsvorrichtung (1) insbesondere in horizontaler Richtung durch die Innenfläche der Wand (7a) getragen ist und in horizontaler Richtung relativ zu der Wand (7a) derart positioniert ist, dass zwischen dem ersten Endabschnitt (2a) und der Innenfläche einer Wand (7a) des Kochbehälters (7) ein Spalt (g) vorhanden ist.

4. Kochsystem (100) nach einem der vorhergehenden Ansprüche, wobei das Kochsystem (100) einen Deckel (11) für den Kochbehälter (7) umfasst, der zwischen einer offenen und einer geschlossenen Position bewegbar ist und an seinem Rand eine Aussparung (11a) aufweist, wobei sich die Erfassungsvorrichtung (1) durch die Aussparung (11a) in den Kochbehälter (7) erstreckt oder erstrecken kann, wenn sich der Deckel (11) in der geschlossenen Position befindet.

5. Kochsystem (100) nach Anspruch 4, wobei der Deckel (11) über einen Tragarm (15), der schwenkbar auf einem Rahmen (16) des Kochsystems (100) montiert ist, kippbar montiert ist.

6. Kochsystem (100) nach einem der vorhergehenden Ansprüche, wobei die elektrische Verkabelung (4) dazu geeignet ist, Sensorsignale von dem einen oder den mehreren Sensoren (3a, 3b, 3c) zu übertragen und/oder Energie an den einen oder die mehreren Sensoren (3a, 3b, 3c) zu übertragen.

7. Kochsystem (100) nach einem der vorhergehenden Ansprüche, wobei die elektrische Verkabelung (4) über die Öffnung (5) mit einem elektrischen Mittel (10) außerhalb des Metallrohrs (2) verbunden ist oder verbindbar ist, wobei das elektrische Mittel (10) außerhalb des Metallrohrs (2) vorzugsweise ein Kabel (10) zum Übertragen von Sensorsignalen von dem einen oder den mehreren Sensoren (3a, 3b, 3c) und/oder von Energie an die elektrische Verkabelung (4) ist.

8. Kochsystem (100) nach einem der vorhergehenden Ansprüche, wobei der erste Abschnitt (2a), der Hakenabschnitt (2c) und der zweite Abschnitt (2b) aufeinanderfolgende Abschnitte eines durchgehenden, einstückigen Metallrohrs (2) sind.

9. Kochsystem (100) nach einem der vorhergehenden Ansprüche, wobei die Erfassungsvorrichtung (1) ferner derart ist, dass
- die zuvor erwähnte Öffnung (5) zwischen dem Inneren (i2b) des zweiten Endabschnitts (2b) und dem Äußeren des Metallrohrs (2) unterhalb der Höhe des Hakenabschnitts (2c) liegt; und/oder
- die zuvor erwähnte Öffnung (5) zwischen dem Inneren (i2b) des zweiten Endabschnitts (2b) und dem Äußeren des Metallrohrs (2) eine nach unten offene Endöffnung des Metallrohrs (2) ist; und/oder
- das Querschnittsprofil des Metallrohrs (2) eckenfrei ist; und/oder
- das Metallrohr (2) ein kreisförmiges Querschnittsprofil aufweist; und/oder
- das Rohr (2) zwei Enden hat, die zwei Endöffnungen (5 und 12) aufweisen, wobei eine (12) eine Öffnung zwischen dem Inneren (i2a) des ersten Endabschnitts (2a) und dem Äußeren des Metallrohrs (2) ist und die andere (5) eine Öffnung zwischen dem Inneren (i2b) des zweiten Endabschnitts (2b) und dem Äußeren des Metallrohrs (2) ist.

10. Kochsystem (100) nach einem der vorhergehenden Ansprüche, wobei jeder von dem einen oder den mehreren Sensoren (3a, 3b, 3c) zumindest teilweise im Inneren (i2a) des ersten Endabschnitts (2a) oder zumindest teilweise im Inneren des Inneren eines rohrförmigen Verlängerungsteils (e1, e2) montiert ist, das an dem ersten Endabschnitt (2a) befestigt ist.

11. Kochsystem (100) nach einem der vorhergehenden Ansprüche, wobei der eine oder die mehreren Sensoren (3a, 3b, 3c) zwei der Wasserfüllstandssensoren (3b, 3c) auf unterschiedlichen vertikalen Höhen umfassen.

12. Kochsystem (100) nach einem der vorhergehenden Ansprüche, wobei jeder Sensor (3a, 3b, 3c) insbesondere über einen oder mehrere Wasserströmungskanäle (p1, p2, p3) mit dem Äußeren der Erfassungsvorrichtung (1) in Strömungsverbindung steht, wobei das Wasser angeordnet ist, in direkten Kontakt mit dem Sensor (3a, 3b, 3c) zu strömen, wenn der Endabschnitt in Wasser eingetaucht ist, so dass der Füllstand davon auf oder über der Höhe des Sensors (3a, 3b, 3c) liegt.

13. Kochsystem (100) nach einem der vorhergehenden Ansprüche, wobei die Erfassungsvorrichtung (1) ein horizontales Trag- und Positionierungselement (6) umfasst, das von dem ersten Endabschnitt (2a) in Richtung der Seite, auf der sich der zweite Endabschnitt (2b) erstreckt, vorsteht.

14. Kochsystem (100) nach einem der vorhergehenden Ansprüche, wobei das Wasserversorgungssystem (9) ein Wasserrohr (9b) umfasst, dessen Strömung durch ein Ventil (9a) steuerbar ist und das einen Wasserauslass aufweist, über den Wasser ausgelassen werden kann, um in den Kochbehälter (7) zu strömen.

## Revendications

1. Système de cuisson (100) comprenant
un réceptacle de cuisson (7), tel qu'une bouilloire ; et
une unité de commande et de surveillance (110) ; et
un dispositif de détection (1) destiné à détecter des conditions à l'intérieur du réceptacle de cuisson (7) ;
dans lequel le dispositif de détection (1) comprend un tube métallique (2) comprenant une première partie d'extrémité (2a), une deuxième partie d'extrémité (2b) et une partie de crochet (2c) reliant les première et deuxième parties d'extrémité (2a, 2b), la partie de crochet (2c) présentant une forme concave ouverte vers le bas, et les première et deuxième parties d'extrémité (2a, 2b) s'étendant vers le bas à partir de la partie de crochet (2c) ; et
un ou plusieurs capteurs (3a, 3b, 3c) montés sur la première partie d'extrémité (2a) ou sur une pièce d'extension (e1, e2) fixée à celle-ci, à une position sous le niveau de la partie de crochet (2c) ; et
un fil électrique (4) connecté auxdits un ou plusieurs capteurs (3a, 3b, 3c) et s'étendant à partir desdits un ou plusieurs capteurs (3a, 3b, 3c) à l'intérieur du tube métallique (2) via l'intérieur (i2a) de la première partie d'extrémité (2a) vers l'intérieur (i2c) de la partie de crochet (2c) et à partir de celui-ci vers l'intérieur (i2b) de la deuxième partie d'extrémité (2b) ;
dans lequel la deuxième partie d'extrémité (2b) du tube métallique (2) comprend une ouverture (5) entre l'intérieur (i2b) de la deuxième partie d'extrémité (2b) et l'extérieur du tube métallique (2), en particulier pour faciliter la connexion du fil électrique (4) à un moyen électrique (10) externe au tube métallique (2) ; et
dans lequel le dispositif de détection (1) est monté ou peut au moins être monté dans une position d'utilisation, dans laquelle il est suspendu en étant supporté verticalement par le bord supérieur (7b) de la paroi de réceptacle (7a) via la partie de crochet (2c) ; et
dans lequel les un ou plusieurs capteurs (3a, 3b, 3c) comprennent
un capteur de température (3a) destiné à détecter une température de l'eau (w) dans laquelle est plongée la première partie d'extrémité (2a), et l'unité de commande et de surveillance (110) est configurée pour commander, sur la base de signaux de capteur reçus à partir du capteur de température (3a), un système de chauffage (8) du réceptacle de cuisson (7), en particulier tel qu'un dispositif de chauffage (8a) de celui-ci ; et
au moins un capteur de niveau d'eau (3b) destiné à détecter un niveau de l'eau (w) dans laquelle est plongée la première partie d'extrémité (2a), et l'unité de commande et de surveillance (110) est configurée pour commander, sur la base de signaux de capteur reçus à partir du capteur de niveau d'eau (3b), un système d'alimentation en eau (9) du réceptacle de cuisson (7), en particulier tel qu'une vanne (9a) de celui-ci.

2. Système de cuisson (100) selon la revendication 1, dans lequel
la première partie d'extrémité (2a), en particulier du dispositif de détection (1) monté de la manière définie, s'étend vers le bas à partir de la partie de crochet (2c) vers l'intérieur du réceptacle de cuisson (7).

3. Système de cuisson (100) selon l'une quelconque des revendications précédentes, dans lequel le dispositif de détection (1) comprend un élément de support horizontal et de positionnement (6) faisant saillie à partir de la première partie d'extrémité (2a) vers le côté sur lequel s'étend la deuxième partie d'extrémité (2a), et l'élément (6) s'appuie contre une face intérieure d'une paroi (7a) du réceptacle de cuisson (7), le dispositif de détection (1) étant en particulier supporté dans la direction horizontale par ladite face intérieure de paroi (7a) et positionné dans la direction horizontale par rapport à la paroi (7a) de manière à présenter un espace (g) entre la première partie d'extrémité (2a) et la face intérieure d'une paroi (7a) du réceptacle de cuisson (7).

4. Système de cuisson (100) selon l'une quelconque des revendications précédentes, dans lequel le système de cuisson (100) comprend un couvercle (11) destiné au réceptacle de cuisson (7), lequel est déplaçable entre une position ouverte et une position fermée, et comprend une cavité (11a) au niveau de son bord, le dispositif de détection (1) s'étendant ou pouvant s'étendre dans le réceptacle de cuisson (7) à travers ladite cavité (11a) lorsque le couvercle (11) est dans la position fermée.

5. Système de cuisson (100) selon la revendication 4, dans lequel le couvercle (11) est monté de façon inclinable par le biais d'un bras de support (15) monté de façon pivotante sur un cadre (16) du système de cuisson (100).

6. Système de cuisson (100) selon l'une quelconque des revendications précédentes, dans lequel le fil électrique (4) est adapté pour transmettre des signaux de capteur à partir des un ou plusieurs capteurs (3a, 3b, 3c) et/ou pour transmettre de la puissance aux un ou plusieurs capteurs (3a, 3b, 3c).

7. Système de cuisson (100) selon l'une quelconque des revendications précédentes, dans lequel le fil électrique (4) est connecté ou peut être connecté à un moyen électrique (10) externe au tube métallique (2) par le biais de l'ouverture (5), dans lequel le moyen électrique (10) externe au tube métallique (2) est de préférence un câble (10) destiné à transmettre des signaux de capteur à partir des un ou plusieurs capteurs (3a, 3b, 3c) et/ou de la puissance au fil électrique (4).

8. Système de cuisson (100) selon l'une quelconque des revendications précédentes, dans lequel la première partie (2a), la partie de crochet (2c) et la deuxième partie (2b) sont des parties successives d'un tube métallique (2) continu en une pièce.

9. Système de cuisson (100) selon l'une quelconque des revendications précédentes, dans lequel le dispositif de détection (1) est en outre conçu de sorte que
- l'ouverture (5) mentionnée ci-dessus entre l'intérieur (i2b) de la deuxième partie d'extrémité (2b) et l'extérieur du tube métallique (2) se trouve sous le niveau de la partie de crochet (2c) ; et/ou
- l'ouverture (5) mentionnée ci-dessus entre l'intérieur (i2b) de la deuxième partie d'extrémité (2b) et l'extérieur du tube métallique (2) est une ouverture d'extrémité ouverte vers le bas du tube métallique (2) ; et/ou
- le profil de section transversale du tube métallique (2) est exempt de coins ; et/ou
- le tube métallique (2) présente un profil de section transversale circulaire ; et/ou
- le tube (2) a deux extrémités présentant deux ouvertures d'extrémité (5 et 12), l'une (12) étant une ouverture entre l'intérieur (i2a) de la première partie d'extrémité (2a) et l'extérieur du tube métallique (2) et l'autre (5) étant une ouverture entre l'intérieur (i2b) de la deuxième partie d'extrémité (2b) et l'extérieur du tube métallique (2).

10. Système de cuisson (100) selon l'une quelconque des revendications précédentes, dans lequel chacun desdits un ou plusieurs capteurs (3a, 3b, 3c) est monté au moins partiellement à l'intérieur (i2a) de la première partie d'extrémité (2a) ou au moins partiellement à l'intérieur d'une partie d'extension tubulaire (e1, e2) fixée à la première partie d'extrémité (2a).

11. Système de cuisson (100) selon l'une quelconque des revendications précédentes, dans lequel les un ou plusieurs capteurs (3a, 3b, 3c) comprennent deux des capteurs de niveau d'eau (3b, 3c) à des niveaux verticaux différents.

12. Système de cuisson (100) selon l'une quelconque des revendications précédentes, dans lequel chacun desdits capteurs (3a, 3b, 3c) est en communication fluidique, en particulier par le biais d'un ou de plusieurs passages d'écoulement d'eau (p1, p2, p3), avec l'extérieur du dispositif de détection (1), l'eau étant destinée à s'écouler en contact direct avec les capteurs (3a, 3b, 3c) lorsque la partie d'extrémité est plongée dans l'eau, de sorte que le niveau de celle-ci se situe au niveau du capteur (3a, 3b, 3c) ou au-dessus de celui-ci.

13. Système de cuisson (100) selon l'une quelconque des revendications précédentes, dans lequel le dispositif de détection (1) comprend un élément de support horizontal et de positionnement (6) faisant saillie à partir de la première partie d'extrémité (2a) vers le côté sur lequel s'étend la deuxième partie d'extrémité (2b).

14. Système de cuisson (100) selon l'une quelconque des revendications précédentes, dans lequel le système d'alimentation en eau (9) comprend un tuyau d'eau (9b) dont l'écoulement peut être commandé par une vanne (9a) et lequel présente une sortie d'eau, par laquelle de l'eau peut être évacuée pour s'écouler dans le réceptacle de cuisson (7).
